Europäisches Patentamt

European Patent Office

Office européen des brevets

(11) Veröffentlichungsnummer: **0 510 519 A1**

(12) **EUROPÄISCHE PATENTANMELDUNG**

(21) Anmeldenummer: **92106582.7**

(22) Anmeldetag: **16.04.92**

(51) Int. Cl.5: **H04M 11/00**, G06F 11/22, H04N 17/00

(30) Priorität: **25.04.91 DE 4113499**

(43) Veröffentlichungstag der Anmeldung:
**28.10.92 Patentblatt 92/44**

(84) Benannte Vertragsstaaten:
**AT BE CH DE DK ES FR GB IT LI NL PT SE**

(71) Anmelder: **THOMSON CONSUMER ELECTRONICS S.A.**
**9, Place des Vosges, La Défense 5**
**F-92400 Courbevoie(FR)**

(72) Erfinder: **Schüler, Leo**
**Triftweg 53**
**W-3300 Braunschweig(DE)**

(74) Vertreter: **Einsel, Robert, Dipl.-Ing.**
**Deutsche Thomson-Brandt GmbH Patent-**
**und Lizenzabteilung Göttinger Chaussee 76**
**W-3000 Hannover 91(DE)**

(54) Verfahren zur Durchführung von Reparaturen an Geräten der Unterhaltungselektronik.

(57) 2.1. Bei der Durchführung von Reparaturen an Geräten der Unterhaltungselektronik, insbesondere Fernsehempfängern, entstehen oft beträchtliche Kosten durch einfache oder mehrfache Anfahrt des Kundendienstes. Bei nicht mehr lohnenden Reparaturen sind diese Kosten verloren. Aufgabe ist es, ein Verfahren zu schaffen, bei dem die Kosten verringert und unnötige Kosten vermieden werden.

2.2. Der Fehler in einer Baugruppe oder in einem Bauteil wird durch ein Signal an einer Klemme angezeigt. Die Fehlerinformation wird über das Telefonnetz (5) an eine Kundendienststelle (7) übertragen oder am Gerät (1) oder einem speziellen Servicegerät (15) angezeigt.

2.3. Insbesondere für den mobilen Kundendienst bei Fernehempfängern

FIG.1

Die Durchführung von Reparaturarbeiten an nicht oder nur mühsam transportablen größeren Geräten der Unterhaltungselektronik bereitet oft erhebliche Kosten durch einfache oder mehrfache Anfahrt des Kundendienstes. Das gilt insbesondere für größere Fernsehempfänger, die nur mit zwei Personen transportiert werden können und auch nicht in jedem Pkw Platz finden. Durch Übergang auf größere Fernsehempfänger mit Bildschirmdiagonalen von 80 bis 90 cm oder Bildröhren mit 16:9 Bildformat, die wegen der Abmessungen und des Gewichtes schwer transportierbar sind, wird die Notwendigkeit eines mobilen Kundendienstes noch wichtiger. Es kommt immer wieder vor, daß der Kundendienst wegen Fehlen eines Ersatzteiles mehrfach anfahren muß oder sich bei einer Anfahrt herausgestellt, daß sich die Reparatur nicht mehr lohnt. Die Anfahrtkosten sind dann in der Regel verloren.

Der Erfindung liegt die Aufgabe zugrunde, ein Verfahren zur Durchführung von Reparaturen zu schaffen, bei dem die durch die Reparatur anfallenden Kosten verringert und unnötige Kosten weitestgehend vermieden werden.

Diese Aufgabe wird erfindungsgemäß dadurch gelöst, daß der Fehler in einer Baugruppe oder einem Bauteil durch ein Signal an einer Klemme angezeigt und die Fehlerinformation über das Telefonnetz an eine Kundendienststelle übertragen oder am Gerät angezeigt wird.

Durch das erfindungsgemäße Verfahren ergeben sich mehrere Vorteile. Die Fahrtkosten für den Kundendienst werden im Regelfall gesenkt, da der Kundendienst durch die vorangegangene Übermittlung der Fehlerinformation bereits das richtige Ersatzteil mitbringen oder vorher bestellen kann. Wenn die Fehlerinformation oder sonstige Gerätedaten anzeigen, daß sich eine Reparatur nicht mehr lohnt, z.B. die Bildröhre defekt, das Gerät zu alt ist oder Ersatzteile nicht mehr verfügbar sind, werden unnütze Kosten für die Anfahrt vermieden. Die Erfindung ist insbesondere für digital arbeitende Fernsehempfänger geeignet, weil dort die Ableitung der Fehlerinformation aus der Schaltung gegenüber analogen Schaltungen besonders einfach ist.

Die vom Gerät zum Kundendienst zur Kundendienststelle oder auf eine Servicegerät angezeigte Information lautet z.B.:
"Ich bin ein Farbfernsehempfänger der Fa. TELEFUNKEN, Typ V540, Baujahr 1984. Bei mir ist die Betriebsspannung U1 des Schaltnetzteils ausgefallen". Der Kundendienstmonteur weißt dann bereits, daß sich voraussichtlich eine Reparatur noch lohnt, und daß ein Baustein mit dem Schaltnetzteil oder wesentliche Ersatzteile für das Schaltnetzteil zweckmäßigerweise mitgebracht werden.

Die Anzeige des Fehlers kann optisch an einem Bildschirm des Fernsehempfänger, an einem getrennten Display oder auch akustisch über einen Lautsprecher erfolgen. Es ist auch möglich, für die Anzeige der Fehlerinformation ein getrenntes, an das Gerät anschließbares Servicegerät vorzusehen. Der Kundendienstmonteur bringt dieses Servicegerät mit, schließt es an einen Modem oder eine Servicebuchse des Fernsehempfängers an und erfährt über die optische oder akustische Anzeige des Servicegerätes Informationen über den Fehler ohne Eingriff in das Gerät selbst.

Vorzugsweise ist an dem Gehäuse, z.B. der Rückwand des Fernsehempfängers, eine Aufnahme für den Telefonhörer vorgesehen. Der Aufnahme ist ein mit der Fehlerinformation gespeister Lautsprecher zugeordnet, über den die Fehlerinformation akustisch in das Telefonnetz eingekoppelt wird. Es ist auch möglich, das Gerät über eine Buchse oder ein Modem ständig mit dem Telefonnetz zu verbinden. Die Übertragung der Fehlerinformation an die Kundendienststelle kann dann selbsttätig ohne Zutun des Bedienenden erfolgen. Vorzugsweise enthält das Gerät eine batteriegepufferte Schaltung, damit die Ausgabe der Fehlerinformation auch bei Ausfall wesentlicher Baugruppen oder Bauteile oder auch bei Netzausfall gewährleistet ist. Die Ausgabe der Fehlerinformation wird vorzugsweise durch einen speziellen Bedienknopf am Gerät oder auch durch die zum Gerät gehörende Fernbedienung ausgelöst.

Das Gerät kann auch einen Speicher enthalten, in dem zusätzliche Servicedaten gespeichert sind. Beispielsweise können in dem Speicher bereits die Bestellnummern wesentlicher Ersatzteile gespeichert sein. Die Fehlerinformation besagt dann, welche Baugruppe oder Bauteil defekt ist und unter welcher Bestellnummer dieses Bauteil angefordert werden kann. Der Speicher kann auch eine Information über die Betriebsdauer des Gerätes enthalten. Dadurch kann die Entscheidung erleichtert werden, ob sich eine Reparatur überhaupt noch lohnt. Die in diesem Speicher enthaltenen Daten können dann in der beschriebenen Weise angezeigt oder über das Telefonnetz an eine Kundendienststelle übertragen werden.

Zwei Ausführungsbeispiele der Erfindung werden im folgenden anhand der Zeichnung erläutert. Darin zeigen

Fig. 1 die Übertragung der Fehlerinformation über das Telefonnetz und

Fig. 2 die Anzeige der Fehlerinformation am Gerät selbst.

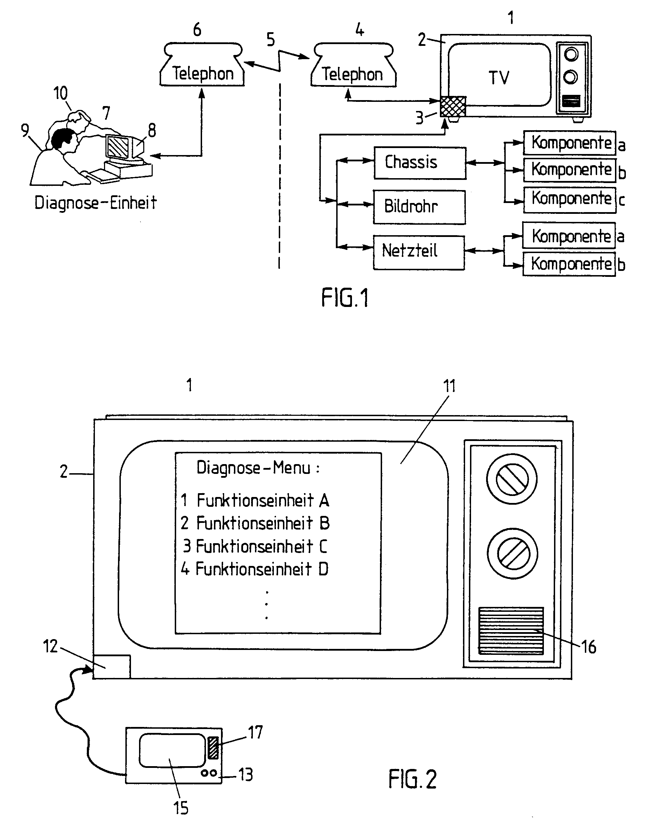

Fig. 1 zeigt einen Fernsehempfänger 1 mit einem Gehäuse 2. An dem Gehäuse 2 ist der Modem 3 angeordnet, der mit dem Telefonapparat 4 gekoppelt ist. Der Telefonapparat 4 kann fest verdrahtet an den Fernsehempfänger 1 angeschlossen sein. Alternativ wird der Telefonhörer in eine Mulde an der Rückwand des Fernsehempfängers 1 gelegt, der ein kleiner piezoelektrischer Lautsprecher zugeordnet ist. Der Fernsehempfänger 1 enthält eine Vielzahl von Meßpunkten, deren Spannungen den Ausfall eines Bauteiles anzeigen. Die dort stehenden Spannungen sind binär, wobei z.B. die Spannung "0" den fehlerfreien Zustand um die Spannung "1" den fehlerhaften Zustand anzeigt. Auf diese Weise können Fehler von Baugruppen oder Komponenten angezeigt werden, wie durch die dargestellten Begriffe "Chassis, Bildrohr, Netzteil" und die entsprechenden Komponenten a, b, c angedeutet ist.

Ein digitales Signal, das den Fehler, den Hersteller, den Gerätetyp und gegebenenfalls weitere Servicedaten beinhaltet, wird über die Telefonleitung 5 zum Telefonapparat 6 der Kundendienststelle 7 übertragen. Dort erfolgt an dem Sichtgerät 8 die Auswertung des Fehlers. Der Kundendienstleiter 9 kann dann entscheiden, ob sich eine Reparatur noch lohnt oder welche Ersatzteile oder Baugruppen für die Reparatur erforderlich sind, und den Kundendienstmonteur 10 mit diesen Ersatzteilen auf den Weg zum Kunden schicken.

In Fig. 2 erfolgt nach Betätigung eines speziellen Bedienknopfes oder durch die Fernsehbedienung ausgelöst auf dem Bildschirm 11 in Form eines Diagnosemenüs die Ermittlung des Fehlers. Auf dem Bildschirm 11 wird letztlich angezeigt, welches Bauteil defekt ist, z.B. daß die Ausgangsspannung U1 des Schaltnetzteils ausgefallen, die Hochspannung für die Bildröhre nicht mehr vorhanden, die Betriebsspannung für den Tuner nicht mehr den richtigen Wert hat oder der Heizfaden der Bildröhre keinen Durchgang hat. Die Fehlerinformation auf dem Bildschirm kann vom Benutzer oder auch vom Servicemonteur ausgewertet werden.

Gemäß einer Abwandlung ist der Fernsehempfänger 1 mit einem Modem und einer Servicebuchse 12 versehen. An diese ist ein spezielles Servicegerät 13 über ein Kabel 14 anschließbar. Die Information über den Fehler wird dann optisch auf dem Bildschirm 15 oder akustisch über dem Lautsprecher 17 des Servicegerätes 13 angezeigt.

**Patentansprüche**

1. Verfahren zur Durchführung von Reparaturen an Geräten der Unterhaltungselektronik, **dadurch gekennzeichnet,** daß der Fehler in einer Baugruppe oder einem Bauteil durch ein Signal an einer Klemme angezeigt und die Fehlerinformation über das Telefonnetz (5) an eine Kundendienststelle (7) übertragen oder am Gerät (1) angezeigt wird.

2. Verfahren nach Anspruch 1, **dadurch gekenn-** **zeichnet,** daß die Anzeige optisch an einem Bildschirm (11) oder Display oder akustisch an einem Lautsprecher (16) erfolgt.

3. Verfahren nach Anspruch 1, **dadurch gekennzeichnet,** daß für die Anzeige der Fehlerinformation ein getrenntes, an das Gerät (1) anschließbares Servicegerät (13) vorgesehen ist.

4. Verfahren nach Anspruch 1, **dadurch gekennzeichnet,** daß das Gerät (1) ständig mit dem Telefonnetzt (5) verbunden ist und die Übertragung der Fehlerinformation an die Kundendienststelle (7) selbsttätig erfolgt.

5. Gerät für ein Verfahren nach Anspruch 1, **dadurch gekennzeichnet,** daß das Gehäuse (2) des Gerätes (1) mit einer Aufnahme für den Telefonhörer versehen und der Aufnahme ein mit der Fehlerinformation gespeister Lautsprecher zugeordnet ist, über den die Fehlerinformation akustisch in das Telefonnetz (5) eingekoppelt wird.

6. Gerät für ein Verfahren nach Anspruch 1, **dadurch gekennzeichnet,** daß das Gerät (1) mit einem Modem (3, 12) versehen ist, an den das Telefonnetz (5) oder das Servicegerät (13) anschließbar ist.

7. Gerät für ein Verfahren nach Anspruch 1, **dadurch gekennzeichnet,** daß das Gerät (1) eine derart batteriegepufferte Schaltung enthält, daß die Ausgabe der Fehlerinformation auch bei Ausfall wesentlicher Baugruppen oder Bauteilen oder bei Netzausfall ermöglicht ist.

8. Gerät für ein Verfahren nach Anspruch 1, **dadurch gekennzeichnet,** daß eine im Gerät (1) enthaltene Schaltung zur Ermittlung und Ausgabe der Fehlerinformation durch eine dem Gerät zugeordnete Fernbedieneinheit einschaltbar ist.

9. Gerät für ein Verfahren nach Anspruch 1, **dadurch gekennzeichnet,** daß das Gerät (1) einen Speicher für zusätzliche Servicedaten wie Zahl der Betriebsstunden, Bestellnummern von Ersatzteilen, Hersteller von Bauteilen oder Baugruppen enthält.

FIG.1

FIG.2

4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | WO-A-8 804 807 (DIGITAL EQUIPMENT CORPORATION) * Figur 1; Spalte 2, Zeile 4 - Spalte 3, Zeile 4 * --- | 1 | H 04 M 11/00 G 06 F 11/22 H 04 N 17/00 |
| A | EP-A-0 411 422 (SOCIETA ITALIANA PER LO SVILUPPO DELL'ELETTRONICA) * Figur 1; Spalte 1, Zeile 39 - Spalte 2, Zeile 18 * --- | 2 | |
| A | PATENT ABSTRACTS OF JAPAN Band 11, Nr. 309 (E-547)(2756), 8. October 1987; & JP - A - 62102656 (SONY) 13.05.1987 --- | 3 | |
| A | DE-A-2 928 463 (MAN) * Seite 7, Zeile 18 - Seite 8, Zeile 20; Anspruch 6 * --- | 3,4 | |
| A | US-A-3 910 322 (HARDESTY et al.) * Figur 1; Spalte 3, Zeilen 12-25 * --- | 5 | RECHERCHIERTE SACHGEBIETE (Int. Cl.5) |
| A | GB-A-2 176 637 (SONY) * Seite 2, Zeilen 6-19 * ----- | | H 04 M G 06 F H 04 N |

Der vorliegende Recherchenbericht wurde für alle Patentansprüche erstellt

| Recherchenort | Abschlußdatum der Recherche | Prüfer |
|---|---|---|
| BERLIN | 03-08-1992 | BREUSING J |